# EUROPÄISCHE PATENTANMELDUNG

(11) **EP 1 647 466 A1**
(43) Veröffentlichungstag der Anmeldung: **19.04.2006**
(21) Anmeldenummer: 05020090.6
(22) Anmeldetag: 15.09.2005
(51) Int. Cl.: B62D 5/06, F04B 53/08, F04C 15/00

(54) **Hydrauliksystem zur Bereitstellung einer Hilfskraft für eine Kraftfahrzeugeinrichtung**

(30) Priorität: 13.10.2004 DE 102004049883
(71) Anmelder: TRW Automotive Electronics & Components GmbH & Co. KG, 78315 Radolfzell (DE)
(72) Erfinder: Bender, Jörg, 78315 Radolfszell (DE); Jacob, Hans-Ullrich, 78333 Stockach (DE)
(74) Vertreter: Strass, Jürgen

(57) **Zusammenfassung**

Ein Hydrauliksystem zur Bereitstellung einer Hilfskraft für eine Kraftfahrzeugeinrichtung umfaßt einen Fluidkreislauf. Der Fluidkreislauf weist eine Pumpe (14), die Fluid aus einem Reservoir (12) fördert, und einen die Pumpe (14) antreibenden Elektromotor (16) auf. Es ist ein Kühlmantel (28) für den Elektromotor (16) vorgesehen, der einen Kühlraum (30) definiert. Der Kühlraum (30) wird vom Fluid des Fluidkreislaufs durchströmt.

## Beschreibung

Die Erfindung betrifft ein Hydrauliksystem zur Bereitstellung einer Hilfskraft für eine Kraftfahrzeugeinrichtung, mit einem Fluidkreislauf, der eine Pumpe, die Fluid aus einem Reservoir fördert, und einen die Pumpe antreibenden Elektromotor aufweist.

Ein solches Hydrauliksystem kann insbesondere für eine hydraulische Lenkunterstützung in Servolenksystemen eingesetzt werden. Aufgrund der dynamischen Forderungen bezüglich der Ansprechzeit der Lenksysteme einerseits und der Forderung nach geringem Energieverbrauch verbunden mit einem hohen Wirkungsgrad andererseits, werden für solche Systeme zunehmend InnenläuferMotoren eingesetzt, d.h. Motoren mit innenliegendem Rotor und außenstehendem Stator, die diesen Ansprüchen genügen können. Solche Motoren bieten nämlich aufgrund der geringeren zu beschleunigenden Massen deutliche Vorteile gegenüber den bekannten Außenläufermotoren.

Die Innenläufermotoren werden in der Regel so ausgelegt, daß sie im extremen Belastungsfall an ihrer Leistungsgrenze arbeiten. Meistens handelt es sich dabei um besondere Prüf- und Testbedingungen, unter denen vorgeschriebene Lenkzyklen in einer definierten Zeit ablaufen. In der täglichen Fahrpraxis kann dann von einer ausreichenden Leistungsreserve ausgegangen werden. Um die geforderten Leistungsparameter zu erreichen, werden Innenläufermotoren entwickelt, bei denen die elektrischen Teile in das Arbeitsmedium (Fluid) des Ölkreislaufs gelegt werden, damit eine ausreichende Kühlung der Motorkomponenten erreicht wird. Ein Beispiel für ein solches Hydrauliksystem ist in der DE 203 02 534 U1 gezeigt. Allerdings muß der sich drehende Rotor bei einem solchen System gegen die Viskosität des Öles arbeiten, was zur Verwirbelung des Mediums und deshalb zu Leistungsverlusten führt. Des weiteren steigt die Verlustleistung insbesondere dann, wenn das Motor-Pumpen-Aggregat im Kältebereich betrieben werden soll (z.B. -40°C) und das Öl eine entsprechend hohe Viskosität hat. Um diese nicht vermeidbare Verlustleistung zu kompensieren, muß der Motor entsprechend höher ausgelegt werden, damit er die geforderte Leistung abgeben kann.

Die Erfindung schafft ein Hydrauliksystem, bei dem für eine effiziente Kühlung des Elektromotors gesorgt ist, ohne daß übermäßige Leistungseinbußen in Kauf genommen werden müssen.

Gemäß der Erfindung ist bei einem Hydrauliksystem der eingangs genannten Art ein Kühlmantel für den Elektromotor vorgesehen, der einen Kühlraum definiert, wobei der Kühlraum vom Fluid des Fluidkreislaufs durchströmt wird. Die Erfmdung macht sich das an sich bekannte und bewährte Prinzip einer Motorkühlung mittels eines Kühlmantels auf besondere Weise zunutze. Der Kühlmantel wird gemäß der Erfindung nicht mit einer separaten Kühlflüssigkeit gespeist, sondern mit dem Fluid des Fluidkreislaufs selbst, d.h. der durch den Kühlmantel definierte Kühlraum ist unmittelbar in den Fluidkreislauf integriert. Ein eigenes Kühlsystem für den Elektromotor ist also nicht erforderlich, und der Aufwand für zusätzliche Leitungen und Anschlüsse im Fluidkreislauf ist sehr gering. Die indirekte Kühlung des Elektromotors mit Hilfe des Kühlmantels hat den Vorteil, daß die elektrischen Teile des Motors nicht vom Fluid umspült werden, so daß auf aufwendige Abdichtungen nach außen verzichtet werden kann. Außerdem wird das Fluid nicht verwirbelt, und sogenannte "Losbrechmomente" aufgrund hoher Viskosität entfallen. Der Elektromotor kann daher mit geringerer Leistung ausgelegt werden.

Der Kühlraum ist vorzugsweise in einer Rücklaufleitung des Fluidkreislaufs angeordnet. Eine solche Anordnung ist vorteilhaft, weil das Fluid im Rücklauf schon etwas kälter und fast drucklos ist.

Es ist aber grundsätzlich auch möglich, den Kühlraum in einer Druckleitung des Fluidkreislaufs anzuordnen, z.B. durch Teilung des druckseitigen Volumenstroms in einen Arbeitsstrom und einen Kühlstrom. In diesem Fall ist jedoch die Leistungsfähigkeit des Hydrauliksystems entsprechend vermindert, und es ist eine entsprechend druckdichte Auslegung des Kühlraums erforderlich.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine schematische Darstellung eines erfindungsgemäßen Hydrauliksystems; und
- Figur 2 eine Schnittsansicht eines Elektromotors für ein erfindungsgemäßes Hydrauliksystem.

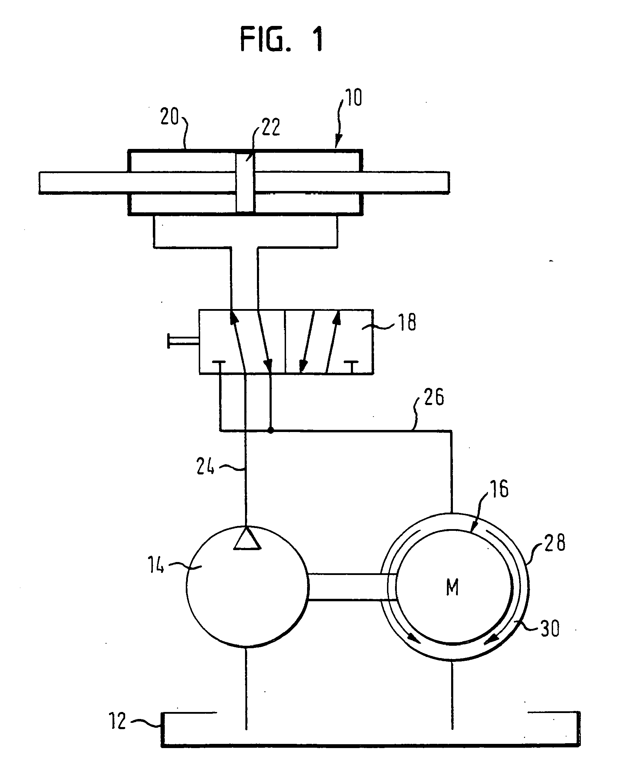

Figur 1 zeigt ein erfindungsgemäßes Hydrauliksystem am Beispiel einer vereinfacht dargestellten Lenkhilfeeinrichtung 10 für ein Kraftfahrzeug. Das Hydrauliksystem umfaßt ein Fluidreservoir 12, eine Pumpe 14, die von einem Elektromotor 16 angetrieben wird, und ein Steuerventil 18. Je nach Stellung des Steuerventils 18 kann ein in einem Zylinder 20 verschiebbar gelagerter Kolben 22 der Lenkhilfeeinrichtung 10 nach rechts oder nach links bewegt werden, um so eine Lenkkraftunterstützung in der gewünschten Richtung bereitzustellen. Das von der Pumpe 14 aus dem Reservoir 12 geförderte Fluid wird dem Steuerventil 18 über eine Druckleitung 24 zugeführt. Das von der Lenkhilfeeinrichtung 10 zurückfließende Fluid wird über eine Rücklaufleitung 26 wieder in das Reservoir 12 befördert.

Der Elektromotor 16 weist einen Kühlmantel 28 auf, der die heißlaufenden Motorteile umgibt. Der Kühlmantel 28 definiert einen Kühlraum 30, der vom Fluid der Rücklaufleitung 26 durchströmt wird, bevor das Fluid zurück in das Reservoir 12 geleitet wird.

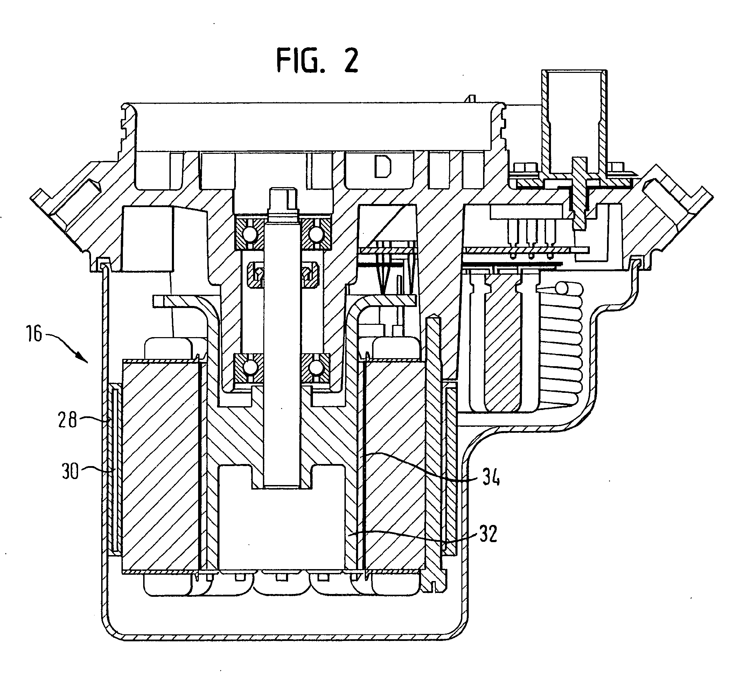

In Figur 2 ist ein Elektromotor 16, der in einem erfindungsgemäßen Hydrauliksystem verwendet werden kann, im Detail dargestellt. Der Elektromotor 16 ist ein Innenläufer mit einem Rotor 32 und einem Stator 34. Um den Stator 34 herum ist ein Kühlmantel 28 aus wärmeleitfähigem Material angeordnet, so daß zwischen dem Kühlmantel 28 und dem Stator 34 ein Kühlraum 30 gebildet ist. Der Kühlraum 30 wird vom Fluid des Fluidkreislaufs durchströmt, wodurch der Elektromotor 16 gekühlt wird.

Der Kühlraum 30 des Elektromotors 16 kann auch in einer Druckleitung des Fluidkreislaufs angeordnet sein.

Um die Kühlleistung zu erhöhen, kann die am Stator 34 anliegende Wand des Kühlmantels 28 mit einer Wärmeleitpaste bestrichen sein.

## Patentansprüche

1. Hydrauliksystem zur Bereitstellung einer Hilfskraft für eine Kraftfahrzeugeinrichtung, mit einem Fluidkreislauf, der eine Pumpe (14), die Fluid aus einem Reservoir (12) fördert, und einen die Pumpe (14) antreibenden Elektromotor (16) aufweist, **gekennzeichnet durch** einen Kühlmantel (28) für den Elektromotor (16), der einen Kühlraum (30) definiert, wobei der Kühlraum (30) vom Fluid des Fluidkreislaufs durchströmt wird.

2. Vorrichtung nach Anspruch 1, **dadurch gekennzeichnet, daß** der Kühlraum (30) in einer Rücklaufleitung (26) des Fluidkreislaufs angeordnet ist.

3. Vorrichtung nach Anspruch 1, **dadurch gekennzeichnet, daß** der Kühlraum (30) in einer Druckleitung des Fluidkreislaufs angeordnet ist.

4. Vorrichtung nach einem der vorhergehenden Ansprüche, **dadurch gekennzeichnet, daß** der Elektromotor (16) ein Innenläufer ist.

5. Vorrichtung nach Anspruch 4, **dadurch gekennzeichnet, daß** der Kühlmantel (30) den Stator (34) des Elektromotors (16) umgibt.

6. Vorrichtung nach Anspruch 5, **dadurch gekennzeichnet, daß** die am Stator (34) anliegende Wand des Kühlmantels (28) mit einer Wärmeleitpaste bestrichen ist.
